# NEW EUROPEAN PATENT SPECIFICATION

(11) **EP 2 858 277 B2**
(45) Date of publication and mention of the opposition decision: **07.09.2022**
(45) Mention of the grant of the patent: 12.06.2019
(21) Application number: 13800193.8
(22) Date of filing: 23.04.2013
(51) Int. Cl.: H04H 40/18, H04B 1/06

(54) **DEVICE AND METHOD FOR CONTROLLING AUDIO SIGNAL**
VORRICHTUNG UND VERFAHREN ZUR STEUERUNG VON AUDIOSIGNALEN
DISPOSITIF ET PROCÉDÉ DE COMMANDE DE SIGNAL AUDIO

(30) Priority: 04.06.2012 KR 20120059795
(43) Date of publication of application: 08.04.2015
(73) Proprietor: Glovane Co., Ltd., Seoul 138-950 (KR)
(72) Inventor: KEE, Moon Cheol, Seoul 150-752 (KR); KIM, Woo Jin, Seoul 137-040 (KR); SHIN, Hee Sung, Anyang-si Gyeonggi-do 431-070 (KR); KIM, Kyu Seok, Hanam-si Gyeonggi-do 465-711 (KR)
(74) Representative: Samson & Partner Patentanwälte mbB
(86) International application number: PCT/KR2013/003433
(87) International publication number: WO 2013/183859

(56) References cited:
- EP-A1- 2 051 523
- EP-A1- 2 355 381
- EP-A1- 2 355 381
- EP-B1- 1 370 016
- DE-A1- 19 902 402
- DE-A1-102005 041 653
- JP-A- H10 247 855
- JP-A- H10 247 855
- JP-A- 2000 307 446
- KR-A- 20070 061 056
- US-A1- 2006 227 814
- US-A1- 2006 227 814
- US-A1- 2007 293 167
- machine translation of WK10
- machine translation of WK12
- "CHAPTER 2 FUNDAMENTALS" In: A. LERCH: "An Introduction to Audio Content Analysis Applications in Signal Processing and Music Informatics", August 2012 (2012-08), Wiley pages 7-30,
- Anonymous: "Energiesignal", Wikipedia, 16 August 2011 (2011-08-16), Retrieved from the Internet: URL:https://de.wikipedia.org/wiki/Energies ignal/https://web.archive.org/web/20110816 074037
- "Chapter 1 Fundamentals of digital audio processing" In: F. AVANZINI et al.: "De Poliexcept for paragraphs labeled", 13 March 2012 (2012-03-13) pages 1-46,
- EBU-UER: "Radio Broadcasting Systems; Digital Audio Broadcasting (DAB) to mobile, portable and fixed receivers", ETSI EN 300401 V.1.4.1, January 2006 (2006-01), Retrieved from the Internet: URL:https://www.etsi.org/deliver/etsi_en/3 00400_300499/300401/01.04.01_40/en_300401v 010401o.pdf
- "6. Korrelationsfunktionen determinierter Signale" In: J.-R. OHM et al.: "Signalübertragung. Grundlagen der digitalen und analogen Nachrichtenübertragungssysteme", 2010, Springer, Berlin Heidelberg pages 203-221,
- F. J. ARCHIBALD: "Cross Fade of Digital Audio Streams", Texas Instruments White Paper, July 2008 (2008-07), pages 1-12, Retrieved from the Internet: URL:https://e2echina.ti.com/cfs-file/-key/ telligent-evolution-components-attachments /13-106-00-00-00-00-34-57/Cross-Fade-of-Di gital-Audio- Streams-White-Paper.pdf

## Description

### TECHNICAL FIELD

The present invention relates to audio signal control, and more particularly, to a device and method for controlling an audio signal, which compensates for a time difference and level difference between two audio signals having the same contents such that a user listens the contents without lag when one audio signal is changed to another audio signal, the two audio signals being transmitted through an analog audio broadcasting network and a digital audio broadcasting network and having a time difference and level difference therebetween.

### BACKGROUND ART

Digital audio broadcasting (hereafter, referred to as "DAB") refers to a digital radio technology which is used in many countries including Europe. Since DAB has various advantages in that DAB is stronger against noise, multiple paths, fading, and inter-channel interference than FM radio which is conventional analog broadcasting, the use of DAB has been expanded.

DAB may include DAB+, DMB (Digital Multimedia Broadcasting) audio, DRM (Digital Radio Mondiale)/DRM+, and HD radio, and analog audio broadcasting such as the conventional AM and FM radio is still widely used.

In the case of DAB, much attention is being paid to service following. The service following refers to a technology which automatically switches a broadcasting network to another broadcasting network having a more favorable reception state in a situation where a broadcasting reception state is changed while the same broadcasting service is transmitted through various broadcasting networks, and enables a user to continuously listen the same broadcasting service without intervention of the user.

For example, when an FM broadcasting service having the same contents exists while the listener moves to a region where no DAB signals are received, the reception state of the listener may be switched to a state in which the corresponding FM broadcasting service is received.

Such a broadcasting network can be configured in various manners, and the same broadcasting service may be transmitted at various frequencies within one ensemble or transmitted to each of various ensembles. Furthermore, the same broadcasting service may be transmitted through a different transmission method such as FM broadcasting.

A terminal, which receives an analog audio broadcasting signal such as an FM broadcasting signal and a digital audio broadcasting signal such as a DAB signal and outputs an audio signal, switches a reception state from one broadcasting network to another broadcasting network, when service following occurs. Between audio signals of different broadcasting networks, a time difference or level difference exists depending on a transmission method or broadcasting station.

Thus, although the audio signals have the same contents, noise may occur in the audio signals due to discontinuity caused by the time difference or the audio volume of the audio signals which has been listened to by the listener may be increased or decreased due to the level difference, while the broadcasting network is switched.

In order to solve the above-described problem, European Patent No. EP0963632B1 has been disclosed as a technology for improving a time difference between an analog audio broadcasting signal and a digital audio broadcasting signal. European Patent No. EP0963632B1 provides a method for calculating a time difference by comparing envelope waves.

However, there is a demand for the development of a device which can compensate for a time difference and level difference between an analog audio broadcasting signal and a digital audio broadcasting signal to a satisfactory level and output audio signals without lag, even when a broadcasting network is switched.

From DE 10 2005 041 653 A1 a method for switching between outputs of a first audio signal and a second audio signal is known, wherein the first and the second audio signals have substantially the same information content. When changing from the first audio signal to the second audio signal, at least one of the parameters of a time offset and a phase position of the second audio signal is adjusted to the corresponding parameter of the first audio signal.

US 2006/0227814 A1 shows a method of detecting time alignment of an analog audio signal and a digital audio signal in a hybrid radio system and an apparatus for performing the method. EP-A-2355381 is disclosing a receiver that seamlessly switches between DAB and FM audio signals. The audio is stretched in order to seamlessly switch from the lagging to the leading signal.

### TECHNICAL PROBLEM

Various embodiments of the present invention are directed to a device for controlling an audio signal, which is capable of compensating for a time difference between an analog audio broadcasting signal such as an FM signal and a digital audio broadcasting signal such as a DAB signal using normalized cross-correlation.

Also, various embodiments of the present invention are directed to a device for controlling an audio signal, which is capable of compensating for a level difference between an analog audio broadcasting signal such as an FM signal and a digital audio broadcasting signal using energy, and compensating a signal difference using cross fading.

The object of the invention is to provide a device according to claim 1.

### ADVANTAGEOUS EFFECTS

In accordance with the embodiments of the present invention, the device for controlling an audio signal may compensate for a time difference between an analog audio broadcasting signal and a digital audio broadcasting signal using a delay value at which normalized cross-correlation is maximized, and compensate for a level difference between the two signals based on cross fading. Thus, the device may output high-quality audio signals of which the volume is constantly maintained, without lag when a broadcasting network is switched.

### DESCRIPTION OF DRAWINGS

FIG. 1 is a block diagram illustrating a device for controlling an audio signal in accordance with an embodiment of the present invention.
FIG. 2 is a timing diagram for explaining a method for compensating for a time difference between two signals, in accordance with an embodiment of FIG. 1.
FIG. 3 is a timing diagram for explaining a method for compensating for a time difference between two signals, in accordance with another embodiment of FIG. 1.

### MODE FOR INVENTION

Hereafter, embodiments of the present invention will be described in detail with reference to the accompanying drawings. The terms used in the present specification and claims are not limited to typical or dictionary definitions, but must be analyzed as meanings and concepts which coincide with the technical aspects of the present invention.

Embodiments described in the present specification and configurations illustrated in the drawings are exemplary embodiments of the present invention, and may not represent the entire technical idea of the present invention. Thus, at the time of filling this application, there may exist various equivalents and modifications which capable of replacing the embodiments.

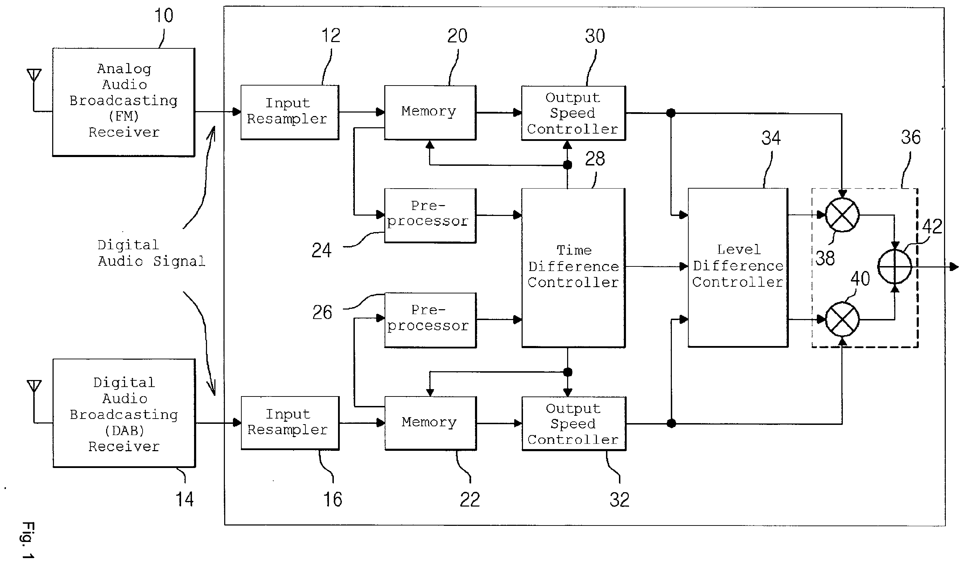

FIG. 1 illustrates a device for controlling an audio signal, which receives an FM signal and a DAB signal and compensates for a time difference and level difference between the two signals in accordance with an embodiment of the present invention.

The device for controlling an audio signal in accordance with the embodiment of the present invention may include an FM receiver 10, a DAB receiver 14, input resamplers 12 and 16, memories 20 and 22, pre-processors 24 and 26, a time difference controller 28, output speed controllers 30 and 32, a level difference controller 34, and a cross-fading controller 36.

The FM receiver 10 and the DAB receiver 14 are only examples of receivers for receiving signals of different broadcasting networks, and various receivers for receiving signals of different broadcasting networks may be provided.

First, the FM receiver 10 is an example of an analog audio broadcasting receiver, and may be configured to receive an FM signal which is loaded in a carrier wave and propagated as an airwave, while tuning the RM signal to a specific frequency, and output the received signal as a first digital audio signal. The DAB receiver 14 is an example of a digital audio broadcasting receiver, and may be configured to receive a DAB signal which is propagated as a satellite or ground wave, while tuning the DAB signal to a specific frequency, and output the received signal as a second digital audio signal.

The input resampler 12 may be configured to convert the first digital audio signal outputted from the FM receiver 10 into data having a sampling frequency which is applied to internal operation and output, and the input resampler 16 may be configured to convert the second digital audio signal outputted from the DAB receiver 14 into data having a sampling frequency which is applied to internal operation and output.

The input resamplers 12 and 16 may have the same output sampling frequency.

For example, when the first digital audio signal is inputted at 32KHz to the input resampler 12 from the FM receiver 10 and the second digital audio signal is inputted at 48KHz to the input resampler 16 from the DAB receiver 14, the input resamplers 12 and 16 may convert the first and second digital audio signals into data having a sampling frequency of 48KHz.

The same sampling frequency data outputted from the input resamplers 12 and 16 may be stored in the memories 20 and 22.

The memory 20 may be configured to transmit the first digital audio signal, which is stored as sampling frequency data applied to internal operation and output, to the pre-processor 24 and the output speed controller 30, and the memory 22 may be configured to transmit the second digital audio signal, which is stored as sampling frequency data applied to internal operation and output, to the pre-processor 26 and the output speed controller 32.

The pre-processors 24 and 26 may be implemented with a low pass filter.

The time difference controller 28 may use normalized cross-correlation to calculate a time difference between the first and second digital audio signals inputted to the pre-processors 24 and 26, and output a delay value, at which the normalized cross-correction is maximized, as a time difference determination signal for controlling the time difference between the two signals. That is, the position at which the normalized cross-correlation is maximized may be recognized as the time difference.

When the time difference controller 28 calculates the time difference, the first and second digital audio signals may be inputted so as to have a similar condition. For this operation, the first and second pre-processors 24 and 26 may be provided. The first and second pre-processors 24 and 26 may have a function of filtering the first and second digital audio signals such that the bandwidths match each other, and outputting the filtered first and second digital audio signals to the time difference controller 28.

In general, an audio signal of digital broadcasting has a wider audio bandwidth than an audio signal of analog broadcasting, and an audio signal of analog broadcasting, such as an FM signal, belongs to a high-frequency region and tends to have much noise. Thus, in order to calculate an accurate time difference, the first and second pre-processors 24 and 26 need to perform filtering such that bandwidths match each other.

The cut-off frequency of the first and second pre-processors 24 and 26 may differ depending on the characteristic of an audio signal. Since the value of the maximum frequency which is actually used during an audio decoding process is known, the cut-off frequency may be adjusted using the value of the maximum frequency, if necessary.

When the time difference controller 28 controls the time difference to the delay value at which the normalized cross-correlation is maximized, the accuracy may be increased more than when the time difference controller 28 controls the time difference to a delay value at which cross-correlation is maximized.

For example, suppose that there are the most similar part A and a slightly less similar B, when a time difference is searched. In this case, when the volume of the part A is low and the volume of the part B is high, the cross-correlation may be maximized at the part B rather than the part A. In order to reduce the influence of such a volume difference, the normalized cross-correlation value may be used. When the normalized cross-correlation is used, it is possible to more accurately find the most similar part, because signals of parts to be compared to each other are compared to the normalized cross-correlation value.

The output speed controllers 30 and 32 may read the first and second digital audio signals from the memories 20 and 22 using the time difference determination signal outputted from the time difference controller 28, and compensate for a time difference between the first and second digital audio signals by delaying or advancing an output of a leading signal between the two signals.

In a normal case, the first digital audio signal of analog broadcasting is outputted before the second digital audio signal of digital broadcasting. Here, an analog broadcasting signal may correspond to an FM signal, and a digital broadcasting signal may correspond to a DAB signal.

The speed control of the output speed controllers 30 and 32 may be performed on the basis of a switching request time point, and the switching request time point may be determined according to a service following algorithm or the like, in consideration of a broadcasting reception state or the like.

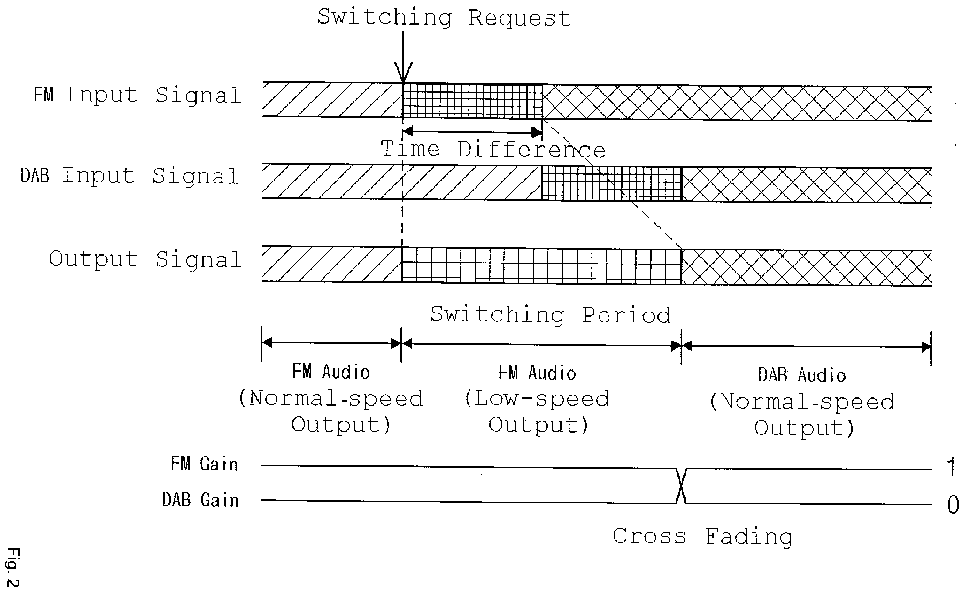

First, as illustrated in FIG. 2, control for changing a leading signal to a lagging signal may be performed by the output speed controllers 30 and 32.

That is, when the second digital audio signal corresponding to a DAB signal arrives after the first digital audio signal corresponding to an FM signal arrives, a DAB signal synchronized with the switching request time point does not yet exist.

Thus, the output speed controller 30 may delay the output of the first digital audio signal until the second digital audio signal corresponding to a DAB signal to be changed arrives. At this time, the extent to which the output of the first digital audio signal is delayed by the output speed controller 30 may be determined according to the time difference determination signal of the time difference controller 28.

After a switching period in which the output of the first digital audio signal is delayed to be synchronized with the second digital audio signal the second digital audio signal may be outputted at normal speed.

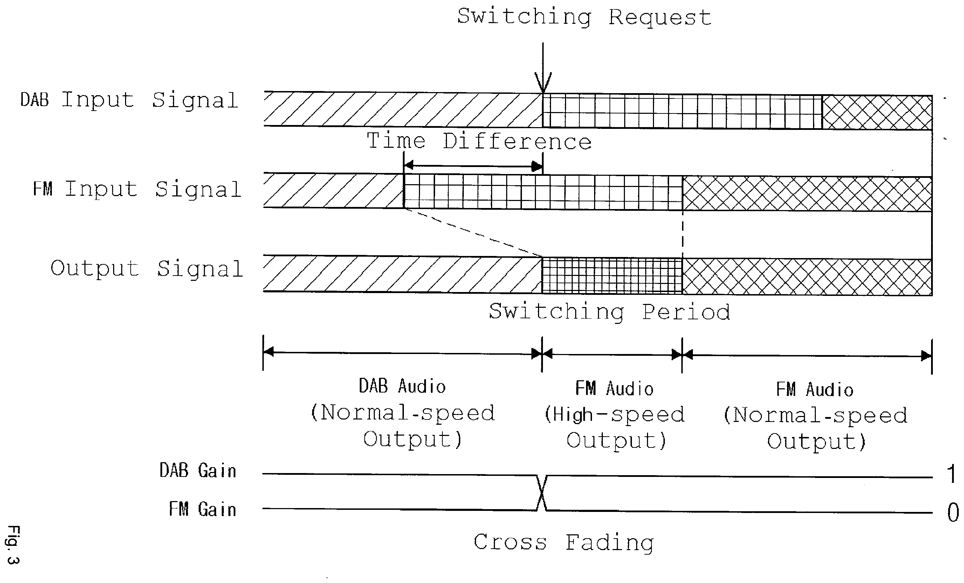

Furthermore, as illustrated in FIG. 3, control for changing a lagging signal to a leading signal may be performed by the output speed controllers 30 and 32.

In this case, at the switching request time point, the second digital audio signal corresponding to a DAB signal arrives, and the first digital audio signal corresponding to an FM signal is already stored in the memory.

Thus, the output speed controller 30 may move to the point of the first digital audio signal which is synchronized at the switching request time point, and compensate for a time difference between the two signals. However, the changed first digital audio signal is delayed by the time difference between the two signals, based on the current broadcasting time point. In order to compensate for the delay, the output of the first digital audio signal may be advanced during a switching period. Then, the first digital audio signal may be synchronized with the second digital audio signal which is currently broadcast. At this time, the extent to which the output of the first digital audio signal is advanced by the output speed controller 30 may be determined according to the time difference determination signal of the time difference controller 28.

After the switching period in which the output of the first digital audio signal is advanced and synchronized with the second digital audio signal which is currently broadcast, the first digital audio signal may be generated at normal speed.

Thus, as the output of the digital audio signal is advanced or delayed by the output speed controllers 30 and 32 during the switching period, the digital audio signal may be outputted at normal speed after the switching period.

The level difference controller 34 receiving the first and second digital audio signals, between which the time difference is compensated for, from the output speed controllers 30 and 32 is configured to determine a level difference between the first and second digital audio signals, and output first and second gain control signals.

The first and second gain control signals outputted from the level difference controller 34 are applied to first and second mixers 38 and 40 forming the cross-fading controller 36, and outputs of the first and second mixers 38 and 40 are applied to an adder 42.

The level difference controller 34 calculates energies of the first and second digital audio signals, and outputs gains, which are to be multiplied by signals to be changed from the first and second digital audio signals, as the first and second gain control signals.

When the second digital audio signal is changed into the first digital audio signal, the level difference controller 34 compares the energy of the first digital audio signal to the energy of the second digital audio signal, and outputs the first gain control signal for adjusting the level of the first digital audio signal. When the first audio signal is changed into the second digital audio signal, the level difference controller 34 compares the energy of the second digital audio signal to the energy of the first digital audio signal, and outputs the second gain control signal for adjusting the level of the second digital audio signal.

That is, the level difference controller 34 adjusts the energies of the first and second digital audio signals to the same level, and outputs the first and second gain control signals for enabling a listener to feel the same volume, even after the first and second digital audio signals are changed.

When the level difference controller 34 outputs the first digital audio signal at a normal period instead of the change time point, the second gain control signal is set to '0'. Then, the second digital audio signal is not outputted, but only the first digital audio signal is outputted. When the level difference controller 34 outputs the second digital audio signal, the first gain control signal is set to '0'. Then, the first digital audio signal is not outputted, but only the second digital audio signal is outputted.

In the cross-fading controller 36, the mixer 38 adjusts the level of the first digital audio signal according to the first gain control signal, and the mixer 40 adjusts the level of the second digital audio signal according to the second gain control signal. Outputs of the mixers 38 and 40 are added through the adder 42 and then finally outputted.

That is, the cross-fading controller 36 increases the volume of a signal having a relatively low level and decrease the volume of a signal having a relatively high level. Thus, the output audio signal maintains a constant volume at all times.

As the cross-fading controller 36 increases the value of the first gain control signal at the time point at which the second digital audio signal is changed to the first digital audio signal, the first digital audio signal fades in. Then, while the value of the second gain control signal decreases to '0', the second digital audio signal fades out. Furthermore, as the cross-fading controller 36 increases the value of the second gain control signal at the time point at which the first digital audio signal is changed to the second digital audio signal, the second digital audio signal fades in. Then, while the value of the first gain control signal decreases to '0', the first digital audio signal fades out.

Therefore, as the time difference and level difference between the analog audio broadcasting signal and the digital broadcasting signal are compensated for, a listener may enjoy high-quality audio signals without lag.

While the present invention has been described with respect to the specific embodiments, it will be apparent to those skilled in the art that various changes and modifications may be made without departing from the scope of the invention as defined in the following claims.

## Claims

1. A divice for controlling an output of first and second digital audio signals having the A contents, comprising:
first and second input resamplers (12,16) configured to convert said first and second digital audio signals inputted through digital audio interfaces (10, 14) into data having the same sampling frequency, respectively;
first and second memories (20, 22) configured to store outputs the first and second input resamplers (12, 16), respectively;
first and second pre-processor (24,26) configured to extract the first and second digital audio signals stored in the first and second memories (20, 22) with bandwidths matching each other, respectively;
a time difference controller (28) configured to determine a time difference between the first and second digital audio signals outputted first and second pre-processors (24, 26) using normalized cross-correlation, and output a time difference determination signal;
first and second output speed controllers (30, 32) configured to compensate for the time difference between the first and digital audio signals by speeding up or down an output of a leading signal between the first and second digital audio signals outputted from the memories (20, 22) according to the time difference determination signal outputted from the time difference controller (28);
a level difference controller (34) configured to determine a level difference between the first and second digital audio signals between which the time difference is compensated for by the first and second output speed controllers (30, 32), and output first and second gain control signals, wherein the level difference controller (34) calculates energies of the first and second digital audio signals and outputs the first and second gain control signals corresponding to the level difference between the two signals, wherein the first and second gain control signals are to be multiplied by signals to be changed from the first and second digital audio signals, wherein when the second digital audio signal is changed into the first digital audio signal, the level difference controller (34) compares the energy of the first digital audio signal to the energy of the second digital audio signal, and outputs the first gain control signal for adjusting the level of the first digital audio signal, wherein when the digital audio signal is changed into the second digital audio signal, the level difference controller (34) compares the energy of the second digital audio signal to the energy of the first digital audio signal, and outputs the second gain control signal for adjusting the level of the second digital audio signal, wherein the level difference controller (34) adjusts the energies of the first and second digital audio signals to the same level, and outputs the first and second gain control signals for enabling a listener to feel the same volume, even after the first and second digital audio signals are changed, wherein when the level difference controller (34) outputs the first digital audio signal at a normal period instead of the change time point, the second gain control signal is set to '0', resulting in the second digital audio signal not being outputted, but only the first digital audio signal being outputted, whereas when the level difference controller (34) outputs the second digital audio signal, the first gain control signal is set to '0', resulting in the first digital audio signal not being outputted, but only the second digital audio signal being outputted; and
a cross-fading controller (36) configured to compensate for the level of the first digital audio signal using the first gain control signal, compensate for the level of the second digital audio signal using the second gain control signal, and add and output the first and second digital audio signals of which the levels are compensated for, wherein the cross-fading controller (36) comprises:
a first mixer (38) configured to control the volume of the first digital audio signal according to the first gain control signal;
a second mixer (40) configured to control the volume of the second digital audio signal according to the second gain control signal; and
an adder (42) configured to add output signals of the first and second mixers;
wherein at the time point at which the second digital audio signal is changed to the first digital audio signal the cross-fading controller (36) increases the value of the first gain control signal resulting in the first digital audio signal fading in, and at the same time decreases the value of the second gain control signal to '0', resulting in the second digital audio signal fading out, wherein at the time point at which the first digital audio signal is changed to the second digital audio signal the cross-fading controller (36) increases the value of the second gain control signal, resulting in the second digital audio signal fading in, and at the same time decreases the value of the first gain control signal to '0', resulting in the first digital audio signal fading out;
wherein when the output of the lagging signal among the first and second digital audio signals is required to be switched to the output of the leading signal, the first and second output speed controllers (30, 32) are configured to compensate for the time difference between the two signals by moving to the time point of the stored leading signal which is synchronized in time with the received lagging signal at the switching request time, and to speed up the output of the stored leading signal until it is synchronized in time with the received leading signal.

2. The device of claim 1, wherein the first and second input resamplers (12, 16) convert the first and second digital audio signals in different frequency bands into data having a sampling frequency of 48KHz.

3. The device of claim 1, wherein the first and second pre-processors (24, 26) comprise a low pass filter.

4. The device of claim 1, wherein the time difference controller (28) determines the time difference between the first and second digital audio signals as a delay value at which normalized cross-correlation is maximized.

5. The device of claim 1, wherein when the leading signal between the first and second digital audio signals is required to be changed to the lagging signal, the first and second output speed controllers (30, 32) compensate for a time difference between the first and second digital audio signals by speeding down the output of the leading signal during a switching period.

## Patentansprüche

1. Vorrichtung zum Steuern einer Ausgabe eines ersten und zweiten digitalen Audiosignals, die den gleichen Inhalt aufweisen, umfassend:
einen ersten und zweiten Eingangs-Resampler (12, 16), die konfiguriert sind, um das erste und zweite digitale Audiosignal, die über digitale Audioschnittstellen (10, 14) eingegeben werden, in Daten mit der gleichen Abtastfrequenz umzuwandeln;
ein erster und zweiter Speicher (20, 22), die konfiguriert sind, um Ausgaben jeweils des ersten und zweiten Eingangs-Resamplers (12, 16) zu speichern;
einen ersten und zweiten Vorprozessor (24, 26), die konfiguriert sind, um das erste und zweite digitale Audiosignal zu extrahieren, die in dem ersten und zweiten Speicher (20, 22) gespeichert sind, wobei die Audiobandbreiten jeweils aufeinander abgestimmt sind;
eine Zeitdifferenzsteuerung (28), die konfiguriert ist, um eine Zeitdifferenz zwischen dem ersten und zweiten digitalen Audiosignal, das von dem ersten und dem zweiten Vorprozessor (24, 26) unter Verwendung einer normierten Kreuzkorrelation ausgegeben wird, zu bestimmen und um ein Zeitdifferenzbestimmungssignal auszugeben;
eine erste und zweite Ausgangsgeschwindigkeitssteuerung (30, 32), die konfiguriert sind, um die Zeitdifferenz zwischen dem ersten und zweiten digitalen Audiosignal durch Beschleunigen oder Verlangsamen einer Ausgabe eines führenden Signals zwischen dem ersten und dem zweiten digitalen Audiosignal, die von den Speichern (20, 22) ausgegeben werden, gemäß dem Zeitdifferenzbestimmungssignal, das von der Zeitdifferenzsteuerung (28) ausgegeben wird, zu kompensieren;
eine Pegeldifferenzsteuerung (34), die konfiguriert ist, um eine Pegeldifferenz zwischen dem ersten und zweiten digitalen Audiosignal zu bestimmen, zwischen denen die Zeitdifferenz durch die erste und zweite Ausgangsgeschwindigkeitssteuerung (30, 32) kompensiert wird, und um ein erstes und zweites Verstärkungssteuersignal auszugeben, wobei die Pegeldifferenzsteuerung (34) Energien des ersten und des zweiten digitalen Audiosignals berechnet und das erste und das zweite Verstärkungssteuersignal entsprechend der Pegeldifferenz zwischen den beiden Signalen ausgibt, wobei das erste und das zweite Verstärkungssteuersignal mit Signalen, die aus dem ersten und dem zweiten digitalen Audiosignal zu ändern sind, zu multiplizieren ist, wobei, wenn das zweite digitale Audiosignal in das erste digitale Audiosignal geändert wird, die Pegeldifferenzsteuerung (34) die Energie des ersten digitalen Audiosignals mit der Energie des zweiten digitalen Audiosignals vergleicht und das erste Verstärkungssteuersignal zum Einstellen des Pegels des ersten digitalen Audiosignals ausgibt, wobei wenn das erste digitale Audiosignal in das zweite digitale Audiosignal geändert wird, die Pegeldifferenzsteuerung (34) die Energie des zweiten digitalen Audiosignals mit der Energie des ersten digitalen Audiosignals vergleicht und das zweite Verstärkungssteuersignal zum Einstellen des Pegels des zweiten digitalen Audiosignals ausgibt, wobei die Pegeldifferenzsteuerung (34) die Energien des ersten und des zweiten digitalen Audiosignals auf denselben Pegel einstellt und das erste und das zweite Verstärkungssteuersignal ausgibt, um es einem Hörer zu ermöglichen, dieselbe Lautstärke zu empfinden, selbst nachdem das erste und das zweite digitale Audiosignal geändert wurden, wobei, wenn die Pegeldifferenzsteuerung (34) das erste digitale Audiosignal mit einer normalen Periode anstelle des Änderungszeitpunkts ausgibt, wobei das zweite Verstärkungssteuersignal auf "0" gesetzt wird, was dazu führt, dass das zweite digitale Audiosignal nicht ausgegeben wird, sondern nur das erste digitale Audiosignal ausgegeben wird, wohingegen, wenn die Pegeldifferenzsteuerung (34) das zweite digitale Audiosignal ausgibt, wobei das erste Verstärkungssteuersignal auf "0" gesetzt wird, was dazu führt, dass das erste digitale Audiosignal nicht ausgegeben wird, sondern nur das zweite digitale Audiosignal ausgegeben wird; und
eine Überblendsteuerung (36), die konfiguriert ist, um den Pegel des ersten digitalen Audiosignals unter Verwendung des ersten Verstärkungssteuersignals zu kompensieren, den Pegel des zweiten digitalen Audiosignals unter Verwendung des zweiten Verstärkungssteuersignals zu kompensieren und das erste und zweite digitale Audiosignal, deren Pegel kompensiert werden, zu addieren und auszugeben, wobei die Überblendsteuerung (36) umfasst:
einen ersten Mischer (38), der konfiguriert ist, um die Lautstärke des ersten digitalen Audiosignals entsprechend dem ersten Verstärkungssteuersignal zu steuern;
einen zweiten Mischer (40), der konfiguriert ist, um die Lautstärke des zweiten digitalen Audiosignals entsprechend dem zweiten Verstärkungssteuersignal zu steuern; und
einen Addierer (42), der konfiguriert ist, um die Ausgangssignale des ersten und zweiten Mischers zu addieren;
wobei zu dem Zeitpunkt, zu dem das zweite digitale Audiosignal in das erste digitale Audiosignal geändert wird, die Überblendsteuerung (36) den Wert des ersten Verstärkungssteuersignals erhöht, was zu einem Einblenden des ersten digitalen Audiosignals führt, und gleichzeitig den Wert des zweiten Verstärkungssteuersignals auf "0" verringert, was zu einem Ausblenden des zweiten digitalen Audiosignals führt, wobei zu dem Zeitpunkt, zu dem das erste digitale Audiosignal in das zweite digitale Audiosignal geändert wird, die Überblendsteuerung (36) den Wert des zweiten Verstärkungssteuersignals erhöht, was zum Einblenden des zweiten digitalen Audiosignals führt, und gleichzeitig den Wert des ersten Verstärkungssteuersignals auf "0" verringert, was zum Ausblenden des ersten digitalen Audiosignals führt;
wobei, wenn die Ausgabe des Verzögerungssignals zwischen dem ersten und zweiten digitalen Audiosignal auf die Ausgabe des führenden Signals umgeschaltet werden soll, die erste und die zweite Ausgabegeschwindigkeitssteuerung (30, 32) konfiguriert sind, um die Zeitdifferenz zwischen den beiden Signalen zu kompensieren, indem sie sich an den Zeitpunkt des gespeicherten führenden Signals bewegen, das zeitlich mit dem empfangenen Verzögerungssignal zum Zeitpunkt der Umschaltanforderung zeitlich synchronisiert ist, und um die Ausgabe des gespeicherten führenden Signals zu beschleunigen, bis es rechtzeitig mit dem empfangenen führenden Signal zeitlich synchronisiert ist.

2. Vorrichtung nach Anspruch 1, bei der der erste und zweite Eingangs-Resampler (12, 16) das erste und zweite digitale Audiosignal in verschiedenen Frequenzbändern in Daten mit einer Abtastfrequenz von 48 kHz umwandeln.

3. Vorrichtung nach Anspruch 1, bei der der erste und zweite Vorprozessor (24, 26) einen Tiefpassfilter umfassen.

4. Vorrichtung nach Anspruch 1, bei der die Zeitdifferenzsteuerung (28) die Zeitdifferenz zwischen dem ersten und zweiten digitalen Audiosignal als Verzögerungswert bestimmt, bei dem die normalisierte Kreuzkorrelation maximal wird.

5. Vorrichtung nach Anspruch 1, bei der, wenn die Ausgabe des führenden Signals zwischen dem ersten und zweiten digitalen Audiosignal auf die Ausgabe des Verzögerungssignals geändert werden muss, die erste und zweite Ausgabegeschwindigkeitsregelung (30, 32) konfiguriert sind, um eine Zeitdifferenz zwischen dem ersten und zweiten digitalen Audiosignal durch Beschleunigen der Ausgabe des gespeicherten führenden Signals während einer Schaltperiode zu kompensieren.

## Revendications

1. Dispositif de commande de la délivrance d'un premier et d'un second signaux audio numériques qui possèdent le même contenu, qui comprend :
un premier et un second ré-échantillonneurs d'entrée (12, 16) configurés pour convertir lesdits premier et second signaux audio numériques transmis par le biais d'interfaces audio numériques (10, 14) en données qui possèdent la même fréquence d'échantillonnage, respectivement ;
une première et une seconde mémoires (20, 22) configurées pour stocker les sorties du premier et du second ré-échantillonneurs d'entrée (12, 16), respectivement ;
un premier et un second préprocesseurs (24, 26) configurés pour extraire le premier et le second signaux audio numériques stockés dans la première et la seconde mémoires (20, 22) avec des bandes passantes audio qui correspondent les unes aux autres, respectivement ;
un contrôleur de différence de temps (28)configuré pour déterminer une différence de temps entre le premier et le second signaux audio numériques transmis délivrés par le premier et le second préprocesseurs (24, 26) à l'aide d'une corrélation croisée normalisée, et pour délivrer un signal de détermination de différence de temps ;
un premier et un second contrôleurs de vitesse de sortie (30, 32) configurés pour compenser la différence de temps entre le premier et le second signaux audio numériques en accélérant ou en ralentissant une délivrance d'un signal principal entre le premier et le second signaux audio numériques délivrés par les mémoires (20, 22) selon le signal de détermination de différence de temps délivré par le contrôleur de différence de temps (28) ;
un contrôleur de différence de niveau (34) configuré pour déterminer une différence de niveau entre le premier et le second signaux audio numériques entre lesquels la différence de temps est compensée par le premier et le second contrôleurs de vitesse de sortie (30, 32), et pour délivrer un premier et un second signaux de commande de gain, dans lequel le contrôleur de différence de niveau (34) calcule des énergies des premier et second signaux audio numériques et délivre les premier et second signaux de commande de gain correspondant à la différence de niveau entre les deux signaux, les premier et second signaux de commande de gain devant être multipliés par des signaux à modifier à partir des premier et second signaux audio numériques, dans lequel, lorsque le second signal audio numérique est changé en le premier signal audio numérique, le contrôleur de différence de niveau (34) compare l'énergie du premier signal audio numérique à l'énergie du second signal audio numérique et délivre le premier signal de commande de gain pour ajuster le niveau du premier signal audio numérique, dans lequel, lorsque le premier signal audio numérique est changé en le second signal audio numérique, le contrôleur de différence de niveau (34) compare l'énergie du second signal audio numérique à l'énergie du premier signal audio numérique et délivre le second signal de commande de gain pour ajuster le niveau du second signal audio numérique, dans lequel le contrôleur de différence de niveau (34) ajuste les énergies des premier et second signaux audio numériques au même niveau et émet les premier et second signaux de commande de gain pour permettre à un auditeur de ressentir le même volume même après que les premier et second signaux audio numériques ont été changés, dans lequel, lorsque le contrôleur de différence de niveau (34) délivre le premier signal audio numérique pendant une période normale au lieu du moment de la modification, le second signal de commande de gain est fixé à "0", résultant en ce que le second signal audio numérique n'est pas délivré, mais que seul le premier signal audio numérique est délivré, tandis que lorsque le contrôleur de différence de niveau (34) délivre le second signal audio numérique, le premier signal de commande de gain est fixé à "0", résultant en ce que le premier signal audio numérique n'est pas délivré, mais que seul le second signal audio numérique est délivré; et
un contrôleur de fondu enchaîné (36) configuré pour compenser le niveau du premier signal audio numérique à l'aide du premier signal de commande de gain, pour compenser le niveau du second signal audio numérique à l'aide du second signal de commande de gain, et pour additionner et délivrer le premier et le second signaux audio numériques dont les niveaux sont compensés, dans lequel le contrôleur de fondu enchaîné (36) comprend:
un premier mélangeur (38) configuré pour contrôler le volume du premier signal audio numérique selon le premier signal de commande de gain ;
un second mélangeur (40) configuré pour contrôler le volume du second signal audio numérique selon le second signal de commande de gain ; et
un additionneur (42) configuré pour additionner les signaux de sortie du premier et du second mélangeurs;
dans lequel, à l'instant où le second signal audio numérique est changé en premier signal audio numérique, le contrôleur de fondu enchaîné (36) augmente la valeur du premier signal de commande de gain, ce qui entraîne un fondu enchaîné du premier signal audio numérique, et en même temps diminue la valeur du second signal de commande de gain à "0", ce qui entraîne une disparition du second signal audio numérique, dans lequel, à l'instant où le premier signal audio numérique est changé en second signal audio numérique, le contrôleur de fondu enchaîné (36) augmente la valeur du second signal de commande de gain, ce qui entraîne un fondu enchaîné du second signal audio numérique, et en même temps diminue la valeur du premier signal de commande de gain à '0', ce qui entraîne une disparition du premier signal audio numérique;
dans lequel, lorsque la délivrance du signal de retard parmi le premier et le second signaux audio numériques doit passer à la délivrance du signal principal, le premier et le second contrôleurs de vitesse de sortie (30, 32) sont configurés pour compenser la différence de temps entre les deux signaux en passant au moment du signal principal stocké qui est synchronisé dans le temps avec le signal de retard reçu au moment de la demande de passage, et pour accélérer la délivrance du signal principal stocké jusqu'à ce qu'il soit synchronisé dans le temps avec le signal principal reçu.

2. Dispositif selon la revendication 1, dans lequel le premier et le second ré-échantillonneurs d'entrée (12, 16) convertissent le premier et le second signaux audio numériques sur des bandes de fréquences différentes en données qui possèdent une fréquence d'échantillonnage de 48 KHz.

3. Dispositif selon la revendication 1, dans lequel le premier et le second préprocesseurs (24, 26) comprennent un filtre passe-bas.

4. Dispositif selon la revendication 1, dans lequel le contrôleur de différence de temps (28) détermine la différence de temps entre le premier et le second signaux audio numériques sous forme d'une valeur de retard à laquelle la corrélation croisée normalisée est maximisée.

5. Dispositif selon la revendication 1, dans lequel, lorsque la délivrance du signal principal parmi le premier et le second signaux audio numériques doit passer à la délivrance du signal de retard, le premier et le second contrôleurs de vitesse de sortie (30, 32) sont configurés pour compenser la différence de temps entre le premier et le second signaux audio numériques en ralentissant la délivrance du signal principal stocké pendant une période de commutation.
